# EUROPEAN PATENT SPECIFICATION

(11) **EP 1 310 161 B1**
(45) Date of publication and mention of the grant of the patent: **26.05.2004**
(21) Application number: 01204468.1
(22) Date of filing: 13.11.2001
(51) Int. Cl.: A01K 13/00

(54) **Rotating cattle brush**
Rotierende Viehbürste
Brosse à bétail rotative

(43) Date of publication of application: 14.05.2003
(73) Proprietor: Vink, Gerrit Jan, 6661 NG Elst (NL)
(72) Inventor: Vink, Gerrit Jan, 6661 NG Elst (NL)

(56) References cited:
- GB-A- 697 927
- NL-A- 8 006 941
- NL-A- 9 100 180
- US-A- 4 061 111
- US-A- 4 276 940

## Description

The invention refers to a mechanically driven brush for cleaning the skin of livestock that is kept in a shed for long periods. The upper surface of pigs and cows consists of slightly curved, sometimes flat, sometimes even concave areas. When the animals are kept in a shed, dust and dirt accumulates in these areas of the back, which can cause skin irritation and itching.

In sheds where cattle can walk about, and in sheds for housing groups of pigs, brushes are often mounted in the sheds, which the animals can rub against to remove the dust and dirt. These can be stationary brushes; these brushes are mostly hinge or spring mounted and the animals brush themselves by rubbing themselves against the brush. In addition, there are also rotating livestock brushes that begin to turn as soon as the animal approaches or touches the brush, so that the animal only has to lean against it to be brushed.

It will be clear that the result achieved by the rotating livestock brush is much better, but the big disadvantage is that the existing types of rotating livestock brush are very expensive.

The existing types of rotating livestock brush consist of a rigid frame enclosing an electric reduction motor and a robust shaft supported on bearings on one side, to which the rotating brush is fitted. The entire unit is then hinge-mounted in a second frame (so that the height can adapt to the height of the animal) that is firmly attached to a wall or parts of the shed fittings. This fixing must be secure and robust, as the construction must not only be able to stand up to animals leaning against the brush, but also to animals in heat that sometimes collide with the brush protruding in the gangway while running and mounting each other. This means it is only possible to affix the brush at a limited number of places in the shed. Not only must there be a secure place to attach it, it is also not possible to place the brush centrally in the shed, in the gangway, as the animals can move about too fast there and collide too heavily with the brush, which is not set up flexibly.

Stationary brushes are also frequently spring mounted in such a way that that they can be bent aside in all directions.

The invention aims to develop a rotating livestock brush that does not have the aforementioned disadvantages. This rotating brush must be easily attached anywhere in the shed, it must adapt easily to the height of the animals, it must be able to move in all directions in connection with animals in heat mounting each other, and it must be much easier and therefore cheaper to produce than the existing types.

This aim is achieved according to the invention by fixing a drum motor round which a roller brush is fitted into a simple tubular frame. This unit is not hung rigidly, but attached flexibly with fastening belts, steel cables or chains to the rafters and girders in the shed, so that it can move freely in the space. The advantage is clear: because the drive is integrated in the brush, the construction is simple and the brush can easily be positioned anywhere in the shed. The brush can move in all directions, and as part of every suspension system is elastic, the brush can easily adapt to the height of the animal.
However, the drum motor was developed for moving a conveyor belt, and can normally give off its heat to this belt, but when a roller brush is clamped or glued round it, the drum motor cannot get rid of its heat. To enable this heat to be discharged adequately, and also to ensure that the roller brush can be fitted and if necessary removed easily, thin-walled U-shaped pieces slightly bevelled on one side are pressed all round between the outside of the drum motor and the inside of the synthetic roller brush. As the U-shaped pieces are pressed with their backs against the curve of the drum motor, this back surface takes on the curved shape of the drum motor and the U-piece therefore ensures that the roller brush is firmly attached to the drum motor. At the same time, a space is created between the motor and the roller so that heat can be discharged, while the thin steel U-shaped pieces act as a heat exchanger.

As the brush is spring mounted, the cows, which often treat the brush very roughly, can push the brush upwards, after which it falls back into the suspension with a jolt, often tipped to one side. As a result, the frame in which the brush and motor hang is abruptly straightened by the springs when it descends. The central shaft of the drum motor then rotates abruptly, so that the brush, the reduction unit and the armature of the electric motor, depending on the direction of rotation, either stop with a jolt or rotate at twice the speed.

A drum motor cannot cope with this sudden change in the direction of rotation, and fractures can be caused in the gear wheels and shear pins. To solve this problem, a slip coupling is introduced between the central shaft and the reduction unit.

The invention is described in detail below on the basis of the model construction according to the invention shown in the figures.

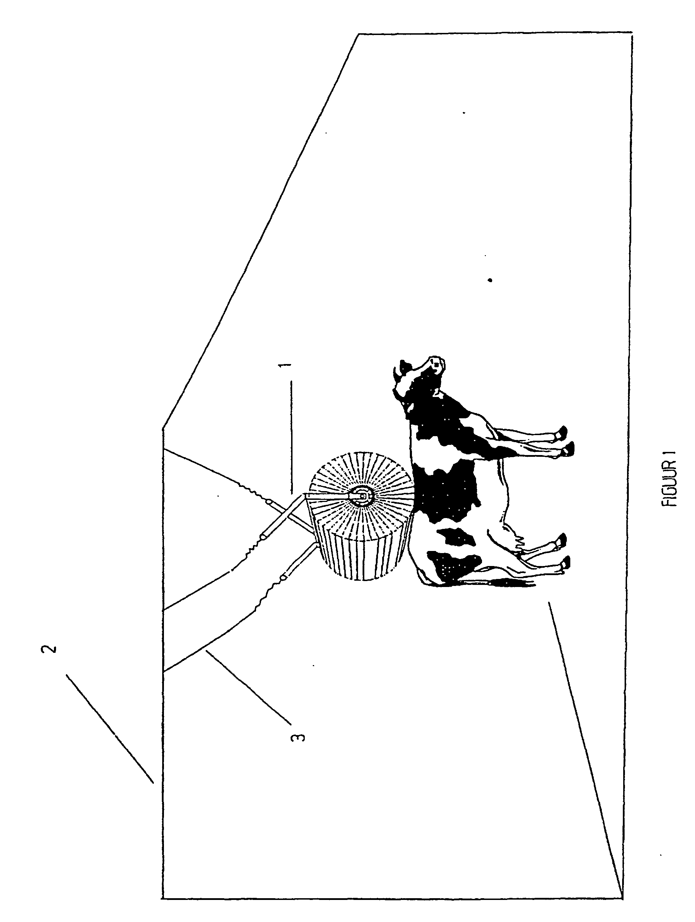

Fig. 1 shows the construction according to the invention hung from the roof rafters of a shed

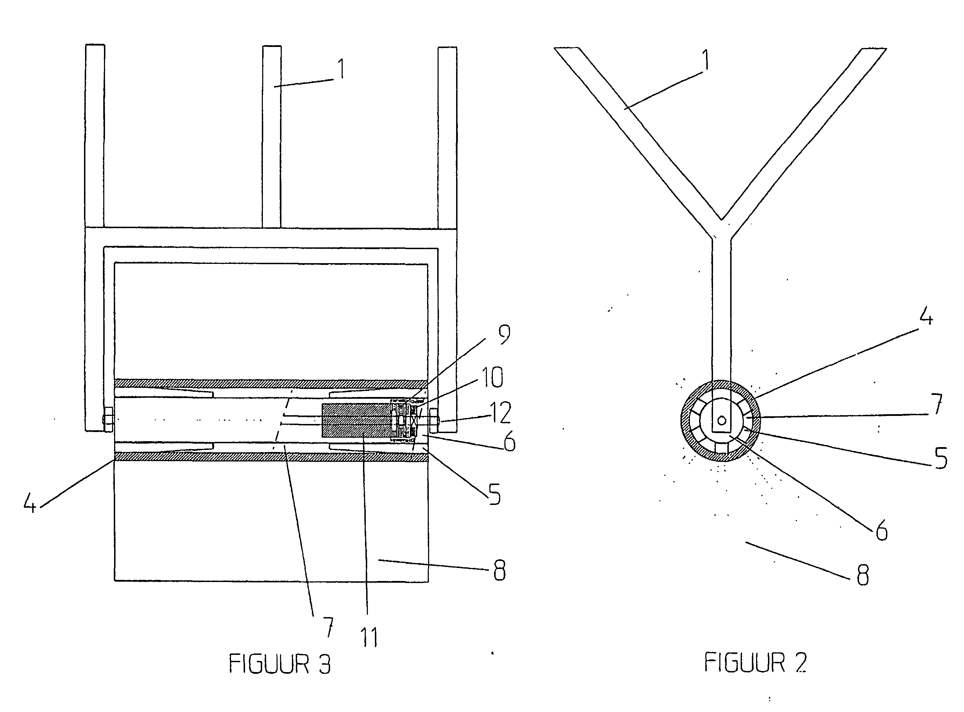

Fig. 2 shows the construction according to the invention as a side elevation
Fig. 3 shows the construction according to the invention as a cross section The entire construction is hung freely in the area, with the suspension frame 1 hung by elastic cables 3 from the roof rafters 2. The roller 4 of brush 8 is attached round drum motor 6 by means of the U-shaped pieces 5, with the U-shaped pieces 5 not only acting as an anchor, but also creating the necessary space for cooling the motor and acting as cooling fins themselves.
The slip coupling 10 is positioned between the central shaft 12 and the reduction unit 9.

## Claims

1. A rotating livestock brush with a drive consisting of a drum motor (6), so that the shaft of this cylinder-shaped brush acts simultaneously as the drive, **characterized in that** by pressing thin-walled U-shaped pieces (5) between the outside of the drum motor (6) and the inside of the cylindrical synthetic brush roller (4), a space (7) is created between the drum motor (6) and the brush roller (4), through which the heat of the motor (6) can be discharged so that the U-shaped pieces (5) act both as an anchor and as cooling fins.

2. A rotating livestock brush according to conclusion 1 **characterized in that** this is mounted in a simple suspension frame (1) that is hung from the girders or rafters in the shed (2) using flexible attachments (3) such as synthetic belts, steel cables or chains, so the entire assembly hangs completely freely in the space and can move in all directions.

3. A rotating livestock brush according to conclusions 1 and 2 **characterized in that** part of each suspension belt, cable or chain (3) is elastic, so that the height of the rotating livestock brush can easily adapt to the height of the animal to be brushed.

4. A rotating livestock brush according to conclusions 1,2 and 3 **characterized in that** a slip coupling (10) is positioned in the drum motor between the reduction unit (9) and the central shaft (12) to compensate for jolts caused by sudden changes in the direction of rotation.

## Patentansprüche

1. Eine sich drehende Viehbürste, deren Antrieb aus einem Trommelmotor (6) besteht, sodass die Achse dieser zylinderförmige Bürste zugleich der Antrieb ist, **dadurch gekennzeichnet, dass** zwischen der Außenseite des Trommelinotors (6) und der Innenseite der zylindrischen Kunststoffbürstenwalze (4) dünnwandige U-förmige Teile (5) gepresst werden, sodass zwischen dem Trommelmotor (6) und der Bürstenwalze (4) rund herum ein Freiraum (7) geschaffen wird, wodurch die Wärme des Motors (6) abgeführt werden kann, sodass die U-förmigen Teile (5) sowohl zur Befestigung als auch als Kühlrippen fungieren.

2. Eine rotierende Viehbürste gemäß der Patentschrift 1, **dadurch gekennzeichnet dass** diese in einen einfachen Aufhängerahmen (1) montiert ist, der mithilfe beweglicher Befestigungen (2) wie Kunststoffbänder, Stahlkabel oder Ketten an den Pfetten oder Sparren im Stall (3) eingehängt wird, sodass das Ganze frei im Raum hängt und nach allen Seiten beweglich ist.

3. Eine rotierende Viehbürste gemäß den Patentschriften 1 und 2, **dadurch gekennzeichnet dass** ein Teil jedes Einhängebandes, jedes Kabels oder jeder Kette (2) elastisch ist, sodass die sich drehende Viehbürste einfach in der Höhe an die Höhe des zu bürstenden Tieres einzustellen ist.

4. Eine rotierende Viehbürste gemäß der Patentschriften 1, 2 und 3, **dadurch gekennzeichnet dass** um Stöße durch plötzliche Änderung der Drehrichtung aufzufangen, im Trommelmotor zwischen dem Untersetzungsgetriebe (9) und der Mittelachse (12) eine Schlupfkupplung (10) angebracht wurde.

## Revendications

1. Une brosse rotative pour bétail dont l'entraînement est composé d'un moteur à tambour (6) de sorte que l'axe cylindrique de cette brosse forme en même temps l'entraînement, **caractérisé en ce qu'** en pressant des parties à fines parois en forme de U (5), entre l'extérieur du moteur à tambour (6) et l'intérieur du tambour cylindrique de la brosse en produit synthétique (4), cela crée ainsi, entre le moteur à tambour (6) et le tambour de la brosse (4), un espace sur le pourtour (7) permettant d'évacuer la chaleur du moteur (6) de sorte que les parties en U (5) fonctionnent aussi bien en tant que fixation, qu'en tant qu'ailettes de refroidissement.

2. Une brosse rotative pour bétail selon la conclusion 1, ayant la caractéristique d'être montée dans un châssis de suspension simple (1), qui peut être suspendu à l'aide de fixations flexibles (2) telles que des bandes en produit synthétique, des câbles en acier ou des chaînes, aux membrures ou pannes dans l'étable (3), de sorte que l'ensemble est suspendu librement dans l'espace et peut être tourné dans toutes les directions.

3. Une brosse rotative pour bétail selon la conclusion 1 et 2, ayant la caractéristique qu'une partie de chaque bande de suspension, câble ou chaîne (2) est élastique, de sorte que la brosse rotative pour bétail peut s'adapter facilement en hauteur à la hauteur de l'animal à brosser.

4. Une brosse rotative pour bétail selon la conclusion 1, 2 et 3, ayant la caractéristique que, pour amortir les chocs causés par de brusques changements dans la direction de la rotation, il a été placé un accouplement à friction (10) dans le moteur à tambour entre la boîte de ralentissement (9) et l'axe central (12).
